Europäisches Patentamt

European Patent Office

Office européen des brevets

(19)

(11) **EP 0 822 408 B1**

(12) **FASCICULE DE BREVET EUROPEEN**

(45) Date de publication et mention
de la délivrance du brevet:
**21.09.2005   Bulletin 2005/38**

(51) Int Cl.⁷: **G01N 21/55**, G01N 21/43

(21) Numéro de dépôt: **97401827.7**

(22) Date de dépôt: **30.07.1997**

(54) **Capteur tubulaire à onde évanescente pour spectroscopie d'absorption moléculaire**

Röhrenförmiger Sensor für evaneszierende Wellen für Absorptions-Molekülspektroskopie

Tubular evanescent wave sensor for molecular absorption spectroscopy

(84) Etats contractants désignés:
**AT DE GB IT**

(30) Priorité:  **02.08.1996   FR 9609811**

(43) Date de publication de la demande:
**04.02.1998   Bulletin 1998/06**

(73) Titulaires:
- **COMMISSARIAT A L'ENERGIE ATOMIQUE
  75015 Paris (FR)**
- **COMPAGNIE GENERALE DES MATIERES
  NUCLEAIRES
  78140 Velizy Villacoublay (FR)**

(72) Inventeur: **Couston, Laurent
30133 Les Angles (FR)**

(74) Mandataire: **Poulin, Gérard et al
BREVALEX
3, rue du docteur Lancereaux
75008 Paris (FR)**

(56) Documents cités:
**EP-A- 0 128 301          EP-A- 0 194 732
GB-A- 2 217 834           US-A- 3 557 619
US-A- 5 170 056**

## Description

## DOMAINE TECHNIQUE

La présente invention concerne un capteur tubulaire à onde évanescente pour spectroscopie d'absorption moléculaire.

Elle s'applique notamment à l'analyse d'espèces en solution liquide.

## ÉTAT DE LA TECHNIQUE ANTÉRIEURE

La spectroscopie d'absorption moléculaire est une méthode analytique très souvent utilisée à l'échelle du laboratoire.

Elle est fondée sur l'absorption sélective d'un rayonnement lumineux par l'espèce à analyser en solution.

On rappelle ci-après les principes de cette méthode.

Soit $I_{0,\lambda}$ l'intensité du rayonnement incident et $I_{T,\lambda}$ l'intensité du rayonnement transmis à la longueur d'onde $\lambda$.

Ces deux paramètres sont liés par la formule suivante :

$$I_{T,\lambda} = I_{0,\lambda} \cdot 10^{-DO}$$

formule où DO représente la densité optique qui est égale à $\varepsilon_\lambda LC$, expression dans laquelle :

- $\varepsilon_\lambda$ est le coefficient d'extinction molaire (exprimé en $mol^{-1}.litre.cm^{-1}$),
- L est le parcours optique dans la solution (exprimé en cm), et
- C est la concentration de l'espèce chimique à analyser (exprimée en $mol.litre^{-1}$).

Pour les spectrophotomètres communément utilisés en laboratoire, les plus fortes densités optiques mesurables sont comprises entre 4 et 7 (d'où une atténuation du signal variant entre $10^4$ et $10^7$).

En utilisant des cuves de mesure ayant un parcours optique L réduit, il est néanmoins possible de mesurer des absorbances $\varepsilon_\lambda C$ qui peuvent atteindre 100 $cm^{-1}$.

Au-delà de ces valeurs, l'échantillon à analyser doit être nécessairement dilué sous réserve que le milieu de dilution ne perturbe pas les propriétés optiques de l'espèce à analyser.

L'analyse en ligne par spectroscopie d'absorption moléculaire (on parle aussi de photométrie d'absorption moléculaire) nécessite l'utilisation d'un capteur optique relié à l'appareil de mesure par l'intermédiaire de deux fibres optiques.

L'une de ces fibres permet d'acheminer la lumière de la source lumineuse que comporte l'appareil jusqu'au point de mesure.

L'autre fibre optique permet de collecter le rayonnement transmis après un parcours optique de longueur L dans la solution.

Comme dans le cas d'une analyse de laboratoire, le parcours optique est ajusté suivant l'opacité de la solution à analyser.

Cependant, quand l'absorbance est très importante (très supérieure à 50 $cm^{-1}$), le parcours optique nécessaire à la mesure devient si faible que la solution est piégée entre l'émetteur de lumière et le collecteur de lumière qui sont associés au capteur, à cause d'un phénomène de capillarité.

Le capteur ne joue donc plus son rôle de capteur en ligne.

On considère dans ce qui suit les capteurs à ondes évanescentes.

Ces capteurs sont destinés aux mesures d'absorption de solutions très absorbantes.

Leur principe est fondé sur la propriété d'intrusion submicronique de la lumière au moment de sa déviation par une surface réfléchissante.

On rappelle d'abord la notion d'onde évanescente.

Lorsqu'un rayon lumineux provenant d'un premier milieu d'indice de réfraction $n_1$ arrive à la surface d'un second milieu d'indice de réfraction $n_2$ inférieur à ni, l'angle d'incidence $\beta$ du rayon lumineux détermine deux comportements de l'onde électromagnétique correspondante :

- Si $\beta$ est inférieur à un angle critique $\beta_c$, l'onde électromagnétique est totalement transmise au second milieu.
- Si $\beta$ est supérieur ou égal à $\beta_c$, l'onde électromagnétique est totalement réfléchie à l'interface entre les deux milieux.

L'angle critique $\beta_c$ est défini par la formule suivante :

$$\sin \beta_c = n_2/n_1.$$

Du point de vue de la physique, le passage brutal d'une onde transmise à une onde réfléchie n'est pas totalement satisfaisant.

Une étude plus précise, au moyen des équations de Maxwell, introduit une étape transitoire entre ces deux phénomènes.

Elle fait intervenir la notion d'onde évanescente.

La modélisation du comportement des ondes électromagnétiques au changement de milieu montre que dans le cas où $\beta$ est supérieur ou égal à $\beta_c$, la lumière pénètre légèrement dans le second milieu avant d'être réfléchie vers le premier.

Cette intrusion, dont la profondeur est liée à la longueur d'onde λ du rayonnement, est appelée "onde évanescente".

La profondeur d'intrusion dp est donnée par la formule suivante :

$$dp = \frac{\lambda}{2.\pi.n_1.\sqrt{(\sin(\beta))^2 - (n_2/n_1)^2}}$$

Pour les longueurs d'onde se situant dans le domaine visible (0,4 μm à 0,8 μm), cette profondeur dp est de quelques micromètres.

C'est cette propriété qui est utilisée dans les capteurs à ondes évanescentes.

On montre ci-après l'intérêt d'une onde évanescente en analyse.

Une onde électromagnétique se propage dans un conducteur optique en effectuant une multitude de réflexions.

A chaque réflexion, le milieu environnant est sondé par le rayonnement.

Il est donc possible de mettre à profit ces réflexions pour réaliser un capteur optique.

Cependant, les dimensions du capteur seront fortement dépendantes des angles d'incidences de l'onde.

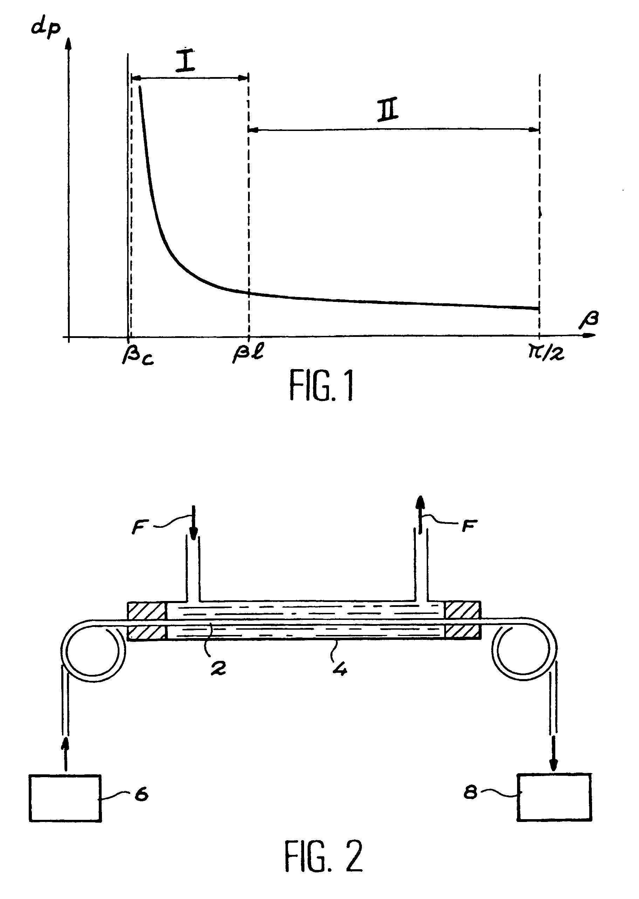

Une courbe illustrant la pénétration d'une onde en fonction de l'angle d'incidence de celle-ci est donnée par la figure 1 des dessins annexés.

L'angle d'incidence β est porté en abscisses et la profondeur d'intrusion dp est portée en ordonnées.

Deux zones peuvent être observées sur la figure 1 et sont séparées par une valeur β1 de l'angle β, qui dépend de la longueur d'onde du rayonnement utilisé et de l'absorbance du milieu sondé par le rayonnement :

- une zone I, caractérisée par une forte pénétration de l'onde, ce qui génère un important taux de réflexion par unité de longueur du conducteur optique, et
- une zone II, caractérisée par une faible pénétration de l'onde, ce qui génère un faible taux de réflexion par unité de longueur du conducteur optique.

C'est par conséquent la zone I qui offre les plus grands avantages (faible encombrement) pour la réalisation d'un capteur miniature à onde évanescente conforme à l'invention, un tel capteur étant destiné à fonctionner dans la zone I.

Il est cependant nécessaire de pouvoir ajuster précisément les angles de propagation de l'onde électromagnétique.

Dès lors que l'on est capable d'ajuster les angles de propagation d'une onde électromagnétique dans un guide optique, on est capable de maîtriser les profondeurs sondées à chacune des réflexions, et par conséquent de faire jouer au guide optique le rôle de capteur optique à onde évanescente.

De telles profondeurs (de l'ordre de 1 m pour des longueurs d'onde du domaine visible) ouvrent de nouvelles perspectives aux méthodes spectrométriques d'analyse in situ.

Actuellement, de nombreux laboratoires montrent un vif intérêt pour de tels capteurs.

Cependant, les problèmes de conception de ces capteurs ont été assez peu abordés.

On connaît deux catégories de capteurs (ou sondes) optiques à onde évanescente.

Dans la première catégorie, qui est schématiquement illustrée par la figure 2, les capteurs comprennent une fibre optique 2 privée de gaine protectrice et placée dans un circuit dérivé 4 où circule la solution à analyser, dans le sens indiqué par les flèches F.

On voit également sur la figure 2 une source de lumière 6 et un détecteur de lumière 8 qui sont respectivement couplés aux extrémités de la fibre 2.

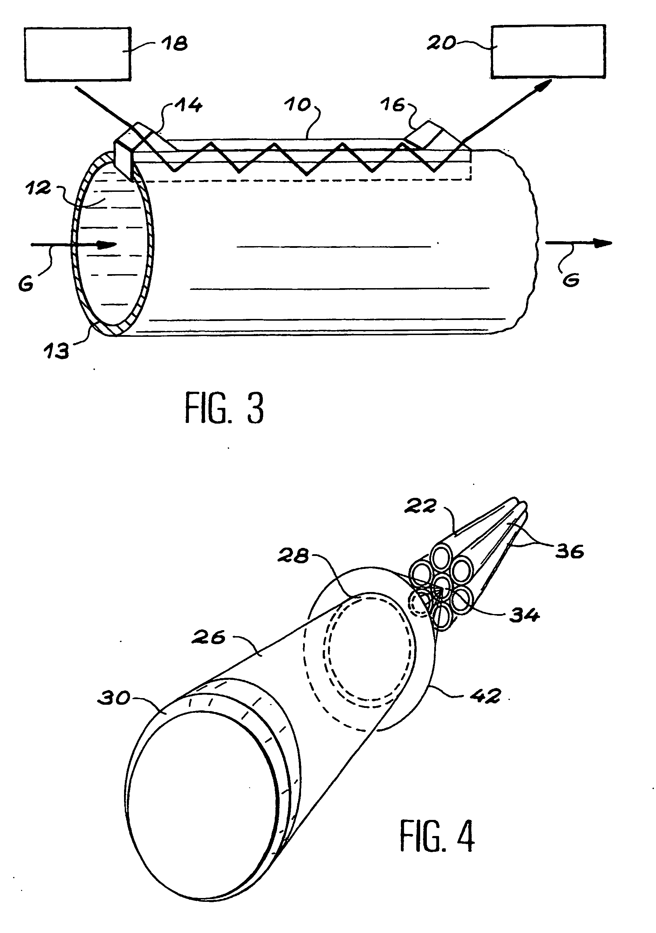

Dans la deuxième catégorie, qui est schématiquement illustrée par la figure 3, les capteurs comprennent une lame de verre 10 dont une face est immergée dans la solution à analyser 12.

Une fente longitudinale réalisée sur la canalisation 13 dans laquelle circule la solution suivant les flèches G reçoit la lame de verre 10 pour permettre cette immersion.

La face opposée de cette lame est équipée de deux prismes 14 et 16 en ses deux extrémités.

Ceux-ci sont respectivement destinés à injecter l'onde électromagnétique dans la lame 10 et à extraire cette onde de la lame.

De plus, ces prismes 14 et 16 sont respectivement couplés à une source de lumière 18 et à un détecteur de lumière 20.

Les capteurs représentés sur les figures 2 et 3 sont les plus répandus à l'échelle du laboratoire.

Ils sont cependant mal adaptés au milieu industriel du fait

- de la distance séparant l'entrée de la sortie de lumière,
- de leur encombrement (pour les capteurs illustrés par la figure 2),
- et des difficultés de mise en oeuvre et de remplacement (pour les capteurs illustrés par la figure 3).

De plus, on connaît par le document EP-A-0 194 732 un capteur pour mesurer l'indice de réfraction d'un fluide, comprenant des moyens d'émission et de réception de lumière disposés à une même extrémité d'un guide optique, l'autre extrémité dudit guide étant recouverte d'une couche réfléchissante.

EXPOSÉ DE L'INVENTION

La présente invention a pour but de remédier aux inconvénients précédents.

Elle a pour objet un capteur à onde évanescente pour l'analyse d'un fluide (un liquide ou un gaz) par spectroscopie d'absorption moléculaire, ce capteur comprenant :

- des moyens d'émission-réception destinés à émettre une lumière, qui est capable d'interagir avec le fluide, et à recevoir cette lumière après interaction de celle-ci avec ce fluide,
- un guide de lumière tubulaire qui est destiné à être plongé dans le fluide, dont une première extrémité est placée en regard des moyens d'émission-réception et dont une deuxième extrémité est apte à réfléchir la lumière qui se propage dans le guide, et
- des moyens de maintien du guide à une distance de ces moyens d'émission-réception, distance qui permet la formation de l'onde évanescente dans le fluide lorsque la lumière se propage dans le guide.

De préférence, les moyens d'émission-réception comprennent :

- une fibre optique centrale qui est destinée à émettre la lumière, l'extrémité de cette fibre située en regard du guide de lumière tubulaire et ce dernier étant coaxiaux, et
- des fibres optiques périphériques qui entourent la fibre optique centrale et sont destinées à recevoir la lumière sortant de la première extrémité du guide.

Selon un mode de réalisation préféré du capteur objet de l'invention, la première extrémité du guide de lumière tubulaire est chanfreinée pour former un cône tronqué, le sommet du cône correspondant se trouvant à l'intérieur du guide.

Le chanfrein permet la propagation de la lumière dans le guide tubulaire suivant des angles propices à l'évanescence de l'onde.

Sans ce chanfrein, la distance séparant le guide tubulaire des moyens d'émission-réception (de préférence des fibres optiques) serait trop importante pour envisager la réalisation d'un capteur de taille réduite.

Ce chanfrein permet ainsi de réduire la distance entre le guide de lumière tubulaire et les moyens d'émission-réception.

Selon un mode de réalisation particulier, la deuxième extrémité du guide de lumière tubulaire est recouverte d'un matériau apte à réfléchir la lumière.

Les moyens de maintien peuvent comprendre :

- un organe tubulaire qui renferme la première extrémité du guide de lumière tubulaire et l'extrémité des moyens d'émission-réception située en regard de cette première extrémité, et
- des moyens d'immobilisation de cette première extrémité à ladite distance, dans l'organe.

Le capteur peut comprendre en outre :

- des moyens de fermeture étanche des première et deuxième extrémités du guide de lumière tubulaire, et
- un fluide d'étalonnage contenu à l'intérieur de ce guide de lumière tubulaire.

Le capteur possède alors une référence interne.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1, déjà décrite, montre les variations de la profondeur dp d'intrusion d'une onde électromagnétique dans un milieu, en fonction de l'angle d'incidence $\beta$ de l'onde, à l'interface entre ce milieu et un autre milieu où se propage l'onde,
- les figures 2 et 3, déjà décrites, montrent de façon schématique des capteurs à onde évanescente connus,
- la figure 4 est une vue en perspective schématique et partielle d'un mode de réalisation particulier du capteur objet de l'invention, et
- la figure 5 est une vue en coupe longitudinale schématique du capteur représenté sur la figure 4.

## EXPOSÉ DÉTAILLÉ DE MODES DE RÉALISATION PARTICULIERS

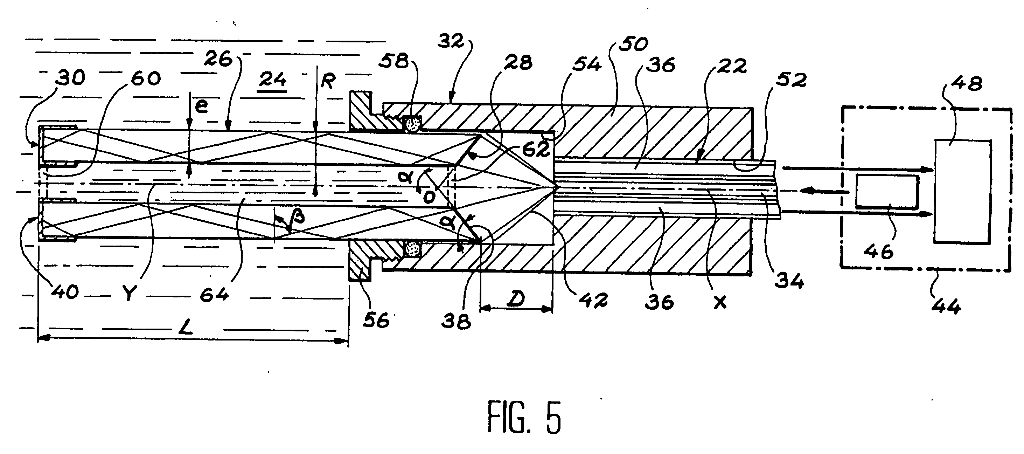

Le capteur conforme à l'invention, qui est schématiquement représenté sur les figures 4 et 5, comprend :

- des moyens d'émission-réception 22 destinés à émettre une lumière capable d'interagir avec une solution liquide référencée 24 que l'on veut analyser par spectroscopie d'absorption moléculaire avec ce capteur, et à recevoir cette lumière après interaction de celle-ci avec le liquide,
- un guide de lumière tubulaire 26, par exemple en verre, qui est destiné à être plongé dans le liquide, dont une première extrémité 28 est placée en regard des moyens d'émission-réception 22 et dont une deuxième extrémité 30 est apte à réfléchir la lumière qui se propage dans le guide, et
- des moyens 32 de maintien du guide à une distance D de ces moyens d'émission-réception 22, cette distance permettant la formation d'une onde évanescente dans le liquide 24 lorsque la lumière se propage dans le guide 26.

Dans l'exemple représenté, les moyens d'émission-réception 22 comprennent un faisceau de fibres optiques comprenant :

- une fibre optique centrale 34 qui est destinée à émettre la lumière, et
- des fibres optiques périphériques 36 qui entourent la fibre optique centrale 34 et sont destinées à recevoir la lumière sortant de la première extrémité 28 du guide 26.

L'axe X de l'extrémité de la fibre 34 située en regard du guide tubulaire coïncide avec l'axe Y de ce dernier.

Au niveau de cette extrémité, les axes des fibres 36 sont parallèles à l'axe de la fibre 34.

La première extrémité 28 du guide de lumière tubulaire 26 est pourvue d'un chanfrein 38 de manière à former un cône tronqué, le sommet O du cône correspondant étant à l'intérieur du guide de lumière tubulaire 26 (sur l'axe Y).

La deuxième extrémité 30 du guide de lumière tubulaire 26 est recouverte d'une couche 40 d'un matériau apte à réfléchir la lumière, cette couche 40 formant ainsi un miroir en l'extrémité 30 du guide de lumière 26.

On voit également sur les figures 4 et 5 le faisceau lumineux conique 42 qui est issu de la fibre optique centrale 34 et dans lequel se trouve l'extrémité 28 du guide 26.

On a également représenté schématiquement sur la figure 5 un appareil de mesure 44 qui permet de faire de la spectroscopie d'absorption moléculaire et de fournir les mesures correspondantes aux utilisateurs.

Cet appareil 44 comprend :

- une source-laser 46 qui produit la lumière transmise par la fibre centrale 34 et
- un dispositif de mesure 48 qui reçoit la lumière provenant des fibres optiques périphériques 36.

Des moyens non représentés permettent un couplage optique

- entre la source 46 et la fibre centrale 34 et
- entre le dispositif 48 et les fibres périphériques 36.

La lumière émise par la source-laser se propage donc dans la fibre centrale et sort de celle-ci sous la forme du faisceau lumineux 42 dans lequel se trouve placée l'extrémité 28 du guide tubulaire 26.

Une partie de ce faisceau 42 pénètre dans ce guide par l'extrémité chanfreinée 28 de celui-ci et s'y propage à l'aide de réflexions successives.

Une onde évanescente se forme dans le liquide 24.

La lumière qui se propage dans le guide, est réfléchie par le miroir 40 et passe dans les fibres périphériques 36 pour être ensuite analysée par le dispositif 48.

L'angle β de propagation de la lumière dans le guide tubulaire 26 est choisi légèrement supérieur à l'angle critique $\beta_c$ pour se trouver dans la zone I mentionnée plus haut.

Cet angle β est ajusté en faisant varier la distance D entre la fibre optique centrale 34 et la grande base du tronc de cône formé par le chanfrein 38.

Le demi-angle au sommet du cône correspondant est noté α.

La distance D correspondant au guide tubulaire chanfreiné (et permettant d'obtenir une onde évanescente) est très inférieure à la distance correspondant à un guide tubulaire non chanfreiné.

Dans le guide tubulaire 26, la lumière est guidée jusqu'à l'extrémité réflectrice 30.

Le matériau qui recouvre cette extrémité est un dépôt d'aluminium revêtu de silice, qui permet de réfléchir totalement l'onde lumineuse.

La lumière retourne alors vers l'extrémité chanfreinée du guide tubulaire.

En franchissant cette extrémité chanfreinée, la lumière ressort du guide tubulaire et forme une image circulaire ayant pour centre l'axe Y de ce guide tubulaire.

Le diamètre de cette image est environ égale au double de l'épaisseur e du guide tubulaire.

La profondeur de pénétration de l'onde lumineuse dans le liquide est définie par le nombre de réflexions du faisceau lumineux dans le guide tubulaire.

Ce nombre est une fonction de l'épaisseur e du guide tubulaire et de la longueur L de la partie de ce guide tubulaire qui se trouve dans le liquide.

Les moyens de maintien 32 comprennent un élément étanche et tubulaire 50 que l'on voit sur la figure 5.

Cet élément 50 comprend, d'un premier côté, un premier trou 52 prévu pour recevoir l'extrémité du faisceau de fibres optiques, extrémité qui est en regard du guide tubulaire 26.

Cet élément 50 comprend aussi, d'un deuxième côté, un deuxième trou 54 prévu pour recevoir l'extrémité chanfreinée du guide tubulaire 26.

Comme on le voit sur la figure 5, ces deux trous sont coaxiaux et communiquent l'un avec l'autre.

Le diamètre extérieur 2R du guide tubulaire est supérieur au diamètre du faisceau de fibres optiques.

Le diamètre du deuxième trou de l'élément 50 est ainsi supérieur au diamètre du premier trou de cet élément.

Au niveau du deuxième côté et devant le deuxième trou, l'élément 50 est pourvu d'un filetage interne et les moyens de maintien 32 comprennent aussi une bague étanche et filetée extérieurement 56 que l'on peut visser dans la partie filetée de ce deuxième trou et qui est traversée par le guide tubulaire 26.

Un joint torique 58 est placé entre cette bague et un épaulement interne de l'élément 50, formé entre le filetage de celui-ci et le deuxième trou 54, de façon que ce joint torique puisse être comprimé par vissage de la bague 32.

Ce joint torique permet de maintenir l'étanchéité de l'intérieur de l'élément 50 lorsque le guide tubulaire est plongé dans le liquide et, par déformation résultant de la compression, permet aussi l'immobilisation de l'extrémité chanfreinée du guide tubulaire dans cet élément, à la distance D choisie, par rapport à l'extrémité de la fibre optique centrale 34.

Le capteur conforme à l'invention est adapté à la mesure de solutions ayant de fortes densités optiques.

Ce capteur présente les quatre avantages suivants vis-à-vis des capteurs à onde évanescente connus, mentionnés plus haut :

- Ce capteur est susceptible d'avoir un faible encombrement, à savoir une longueur de l'ordre de 15 cm et un diamètre extérieur de l'ordre de 1 cm.
- L'entrée du rayonnement et la sortie du signal s'effectuent du même côté de ce capteur.
- Il est possible de placer ce capteur "en ligne" et il n'est donc pas nécessaire de le placer sur un flux dérivé.
- La partie creuse du guide tubulaire peut être fermée et remplie d'une solution liquide d'étalonnage.

Dans ce cas, le capteur possède une référence interne.

Cette possibilité est schématiquement illustrée par la figure 5 où l'on voit deux bouchons 60 et 62 qui ferment respectivement les deux extrémités du guide tubulaire.

L'intérieur de ce dernier est rempli d'une solution liquide 64 constituant un étalon de mesure.

On donne ci-après des formules permettant l'optimisation de la distance D permettant l'obtention d'ondes évanescentes avec le guide tubulaire 26.

La distance D est choisie dans l'intervalle délimité par les valeurs $D_1$ et $D_2$ qui suivent, en fonction de la sensibilité requise pour la mesure que l'on veut faire.

Ces valeurs $D_1$ et $D_2$ sont données par les formules suivantes :

$$D_1 = \frac{\phi/2+R}{tg\beta_c}$$

$$D_2 = \frac{R - \phi/2 - e(1 + (tg\beta_c/tg\alpha))}{tg\beta_c}$$

où $\phi$ représente le diamètre de la gaine optique de la fibre optique centrale 34 et $\beta_c$ représente l'angle limite de propagation de la lumière dans le guide tubulaire, cet angle limite étant défini par :

$$\sin \beta_c = n_l/n_g$$

où $n_1$ représente l'indice de réfraction de la solution liquide 24 et $n_9$ représente l'indice de réfraction du matériau transparent à la lumière, qui constitue le guide de lumière tubulaire.

## Revendications

1. Capteur à onde évanescente pour l'analyse d'un fluide (24) par spectroscopie d'absorption moléculaire, ce capteur comprenant :

   - des moyens d'émission-réception (22) destinés à émettre une lumière, qui est capable d'interagir avec le fluide, et à recevoir cette lumière après interaction de celle-ci avec ce fluide,
   - un guide de lumière tubulaire (26) qui est destiné à être plongé dans le fluide, dont une première extrémité est placée en regard des moyens d'émission-réception, et dont une deuxième extrémité est apte à réfléchir la lumière qui se propage dans le guide, et
   - des moyens (32) de maintien du guide à une distance de ces moyens d'émission-réception, distance qui permet la formation de l'onde évanescente dans le fluide lorsque la lumière se propage dans le guide.

2. Capteur selon la revendication 1, dans lequel les moyens d'émission-réception (22) comprennent :

   - une fibre optique centrale (34) qui est destinée à émettre la lumière, l'extrémité de cette fibre située en regard du guide de lumière tubulaire et ce dernier étant coaxiaux, et
   - des fibres optiques périphériques (36) qui entourent la fibre optique centrale et sont destinées à recevoir la lumière sortant de la première extrémité du guide.

3. Capteur selon l'une quelconque des revendications 1 et 2, dans lequel la première extrémité du guide de lumière tubulaire (26) est chanfreinée pour former un cône tronqué, le sommet (O) du cône correspondant étant à l'intérieur du guide.

4. Capteur selon l'une quelconque des revendications 1 à 3, dans lequel la deuxième extrémité du guide de lumière tubulaire (26) est recouverte d'un matériau (40) apte à réfléchir la lumière.

5. Capteur selon l'une quelconque des revendications 1 à 4, dans lequel les moyens de maintien (32) comprennent :

- un organe tubulaire (50) qui renferme la première extrémité du guide de lumière tubulaire et l'extrémité des moyens d'émission-réception située en regard de cette première extrémité, et
- des moyens (56, 58) d'immobilisation de cette première extrémité, à ladite distance, dans l'organe.

6. Capteur selon l'une quelconque des revendications 1 à 5, comprenant en outre :

- des moyens (60, 62) de fermeture étanche des première et deuxième extrémités du guide de lumière tubulaire, et
- un fluide d'étalonnage (64) contenu à l'intérieur de ce guide de lumière tubulaire, le capteur ayant ainsi une référence interne.

**Patentansprüche**

1. Sensor für evaneszierende Wellen zur Analyse eines Fluids (24) durch Molekülabsorptionsspektroskopie, wobei dieser Sensor umfasst:

- Sende-Empfangseinrichtungen (22), fähig ein mit dem Fluid wechselwirkendes Licht auszusenden und dieses Licht nach der dessen Wechselwirkung mit dem Fluid zu empfangen,
- einen röhrenförmigen Lichtleiter (26), der dazu bestimmt ist, in das Fluid eingetaucht zu werden und von dem ein erstes Ende den Sende-Empfangseinrichtungen gegenübersteht, und von dem ein zweites Ende fähig ist, das sich in dem Leiter ausbreitende Licht zu reflektieren, und
- Halteeinrichtungen (32), dazu dienend, den Leiter in einem Abstand von diesen Sende-Empfangseinrichtungen zu halten, der die Bildung der evaneszierenden Welle in dem Fluid ermöglicht, wenn das Licht sich in dem Leiter ausbreitet.

2. Sensor nach Anspruch 1, bei dem die Sende-Empfangseinrichtungen (22) umfassen:

- eine zentrale optische Faser (34), dazu bestimmt, das Licht auszusenden, wobei das Ende dieser Faser dem röhrenförmigen Lichtleiter gegenübersteht und dieser Lichtleiter koaxial ist, und
- periphere optische Fasern (36), welche die zentrale optische Faser (34) umgeben und dazu dienen, das aus dem ersten Ende des Leiters austretende Licht aufzunehmen.

3. Sensor nach einem der Ansprüche 1 und 2, bei dem das erste Ende des röhrenförmigen Leiters (26) kegelstumpfförmig abgefast ist, wobei die Spitze (O) des entsprechenden Kegels sich im Innern des Leiters befindet.

4. Sensor nach einem der Ansprüche 1 bis 3, bei dem das zweite Ende des röhrenförmigen Lichtleiters (26) mit einem das Licht reflektierenden Material (40) beschichtet ist.

5. Sensor nach einem der Ansprüche 1 bis 4, bei dem die Halteeinrichtungen (32) umfassen:

- ein röhrenförmiges Bauteil (50), welches das erste Ende des röhrenförmigen Lichtleiters und das Ende der diesem ersten Ende gegenüberstehenden Sende-Empfangseinrichtungen umschließt, und
- Einrichtungen (56, 58) zur Arretierung dieses ersten Endes mit dem genannten Abstand in dem Bauteil (50).

6. Sensor nach einem der Ansprüche 1 bis 5, außerdem umfassend:

- Einrichtungen (60, 62) zum dichten Verschließen des ersten und zweiten Endes des röhrenförmigen Lichtleiters, und
- ein Eich-Fluid (64), enthalten im Innem dieses röhrenförmigen Lichtleiters, infolgedessen dieser Sensor eine inteme Referenz besitzt.

**Claims**

1. Evanescent wave sensor for analyzing a fluid (24) by molecular absorption spectroscopy, said sensor comprising:

- emission-reception means (22) for emitting a light, which is able to interact with the fluid, and receives said light after its interaction with said fluid,
- a tubular light guide (26) intended to be immersed in the fluid and whereof a first end is positioned facing the emission-reception means and whereof a second end is able to reflect the light propagating in the guide and
- means (32) for maintaining the guide at a distance from the emission-reception means, said distance permitting the formation of the evanescent wave in the fluid when the light propagates in the guide.

2. Sensor according to claim 1, wherein the emission-reception means (22) comprise:

- a central optical fibre (34) for emitting light, the end of said fibre located facing the tubular light guide and the latter being coaxial and

- peripheral optical fibres (36), which surround the central optical fibre and receive the light passing out of the first end of the guide.

3. Sensor according to either of the claims 1 and 2, wherein the first end of the tubular light guide (26) is chamfered to form a truncated cone, the apex (0) of the corresponding cone being within the guide.

4. Sensor according to any one of the claims 1 to 3, wherein the second end of the tubular light guide (26) is covered with a material (40) able to reflect light.

5. Sensor according to any one of the claims 1 to 4, wherein the holding means (32) comprise:

- a tubular member (50) containing the first end of the tubular light guide and the end of the emission-reception means positioned facing said first end and
- means (56, 58) for immobilizing said first end at the said distance within the member.

6. Sensor according to any one of the claims 1 to 5, wherein it also comprises:

- means (60, 62) for the tight sealing of the first and second ends of the tubular light guide and
- a calibration fluid (64) contained in said tubular light guide, so that said sensor has an internal reference.

FIG. 1

FIG. 2

FIG. 3

FIG. 4

FIG. 5

EP 0 822 408 B1